Europäisches Patentamt

European Patent Office

Office européen des brevets

(11) Publication number: **0 194 101**
**A2**

(19)

# EUROPEAN PATENT APPLICATION

(21) Application number: **86301413.0**

(22) Date of filing: **27.02.86**

(51) Int. Cl.⁴: **C 10 G 11/05, B 01 J 29/08**

(30) Priority: **01.03.85 US 707635**
**01.03.85 US 707362**
**28.06.85 US 750813**

(43) Date of publication of application: **10.09.86**
**Bulletin 86/37**

(84) Designated Contracting States: **AT BE CH DE FR GB IT LI LU NL SE**

(71) Applicant: **ENGELHARD CORPORATION, 70 Wood Avenue South CN 770, Iselin New Jersey 08830 (US)**

(72) Inventor: **Himpsl, Francis Louis, 153 Ravine Drive, Matawan New Jersey (US)**
Inventor: **Silverman, Lance D., 509 East 77th Street, New York New York (US)**
Inventor: **Speronello, Barry K., 283 Manning Avenue, River Edge New Jersey (US)**

(74) Representative: **Geering, Keith Edwin et al, REDDIE & GROSE 16 Theobalds Road, London WC1X 8PL (GB)**

(54) Faujasite catalyst, its preparation, and its use for petroleum feedstock cracking.

(57) A fluid cracking catalyst is described consisting essentially of microspheres of in-situ crystallised Y-faujasite having a unit cell size of less than 2.460 nm, a sodium content (as Na₂O) of less than 2% by weight, a micropore volume of up to about 0.25 cc/g and a surface area in excess of 250 m²/g. A method of preparing catalyst microspheres containing Y-faujasite comprises providing microspheres containing at least 40 weight % [e.g. 50 to 79 weight %] of in-situ crystallised Y-faujasite having a micropore volume of up to 0.25 cc/g and reducing the unit cell size of the Y-faujasite by at least 0.001 nm and the sodium content by ammonium exchange and subsequent calcination (preferably in the presence of steam). The catalyst of the invention is useful in a petroleum feedstock cracking process to obtain high yields of high octane gasoline.

SAMPLE VS CONVERSION

STRAIGHT CATALYSTS –
FULL CONVERSION RANGE DATA (60-90)

····NUMBERS IN PARENTHESES ARE THE CALCULATED COKE YIELDS AT EACH CONVERSION LEVEL REPRESENTED

EP 0 194 101 A2

## FAUJASITE CATALYST, ITS PREPARATION, AND ITS USE FOR PETROLEUM FEEDSTOCK CRACKING.

Lead is a cumulative poison. Since even small amounts may have severely detrimental effects on both living organisms and many common catalysts, governmental regulations limit its applications, particularly its use in gasoline as an octane booster. Thus, refiners urgently need methods of producing high octane unleaded gasoline. Fluidized catalytic cracking processes form the heart of modern petroleum refineries and typically modifications which produce naphthas yielding high octane gasoline sacrifice gasoline selectivity for that increased octane, that is, increased amounts of products which are not usable in gasoline result from those modifications.

One method of increasing the octane of gasoline involves substitution of Y-faujasite which has been ammonium exchanged and calcined for the rare earth exchanged forms of Y-faujasite commonly used in fluid cracking catalysts. Unfortunately, application of ammonium exchanged, calcined Y-faujasite catalyst has been limited due to the penalty often exacted in gasoline selectivity.

This invention concerns fluid cracking catalysts which can produce naphthas yielding surprisingly high octane gasoline. Further, catalysts of this invention can achieve this improvement without the substantial sacrifice in gasoline yield which usually results from the octane improving techniques known to the prior art. This invention also concerns methods of making and using such catalysts to obtain high yields of high octane gasoline; the invention can accomplish this with low coke, hydrogen and gas production while maintaining satisfactory attrition resistance and excellent hydrothermal stability.

The present invention provides a fluid cracking catalyst consisting essentially of microspheres of in-situ crystallised Y-faujasite having a unit cell size of less than 2.460 nm, a sodium content (as $Na_2O$) of less than 2% by weight, a micropore volume of up to about 0.25 cc/g and a surface area in excess of 250 $m^2$/g. The catalyst may have a total porosity of less than 0.5 or 0.25 cc/g and/or a micropore volume of from 0.02 to 0.25 cc/g (e.g. less than 0.2 cc/g preferably from 0.08 to 0.15 or to 0.10 cc/g. Preferably the said unit cell size is from 2.45 to 2.46 nm or is less than 2.455 nm (e.g. from 2.435 to 2.455 nm) or less than 2.445 nm.

The invention also provides a method of preparing catalyst microspheres containing Y-faujasite, the method comprising providing microspheres containing at least 40 weight % [e.g. 50 to 70 weight %] of in-situ crystallised Y-faujasite having a micropore volume of up to 0.25 cc/g and reducing the unit cell size of the Y-faujasite and the sodium content by ammonium exchange and subsequent calcination (preferably in the presence of steam). Preferably the unit cell size is reduced by at least 0.001 or 0.002 nm, e.g. by at least 0.003 or 0.005 nm, and preferably by at least 0.01 or 0.10 nm.

In one preferred aspect, the invention comprises reduced unit cell size Y-faujasite which has been crystallized in situ in a controlled microporosity silica alumina matrix and may be substantially free of rare earth oxides. The sodium content of the reduced cell size Y-faujasite is less than 1.5% based on the weight of the catalyst. The catalytic microspheres contain from about 0.02 to about 0.25 cc/g of pores ranging in size from about 2.0 to about 10.00 nm and are produced by crystallizing more than about 40% by weight Y-faujasite zeolite in the macropores of microspheres derived e.g. from a mixture of metakaolin clay and kaolin clay that has been calcined at least through its characteristic exotherm as described in U.S.P. 4,493,902, to which reference is directed.

After the microspheres are formed, crystallized and washed, the sodium content is reduced to less than about 1.5%, and the microspheres are calcined reducing the unit cell size of the Y-faujasite by at least about 0.03 $\overset{o}{A}$ while maintaining a B.E.T. surface area of at least about 250 $m^2/g$ by at least partially exchanging the sodium ions in the crystallized Y-faujasite for ammonium ions, then calcining the partially ammonium exchanged catalyst in the presence of steam. Some preferred catalysts of the present invention have: a surface area of 300-425 $m^2/g$ (corresponding roughly to over about 40% Y-faujasite); Y-faujasite with a unit cell size of 24.35 to 24.55 $\overset{o}{A}$; a sodium content of from about 0.3 to 0.5% (as $Na_2O$) based on the weight of the catalyst; and are prepared from microspheres containing sodium form Y-faujasite having a silica to alumina mole ratio of at least about 4.8. Some preferred catalysts of the present invention are also substantially free of catalytic transition metals such as iron, cobalt, nickel and the platinum group metals.

In most applications, the catalyst will be introduced into the cracking unit as a combination of zeolite containing catalyst particles and relatively less catalytically active additive particles. Additives such as microspheres of calcined kaolin clay may be used as set forth in U.S. Patent 4,493,902 or vanadium immobilizing additives such as those disclosed in EP Patent Application Nos.86300211 and 86300212 may be used. The most preferred additives for vanadium immobilization purposes are microspheres formed by calcining spray dried mixtures of hydrous kaolin and dolomitic limestone.

4

In the accompanying drawings :

Figures 1 and 6 illustrate the variation in total coke make obtained with straight catalysts of the present invention of varying unit cell size;

Figures 2 and 4 illustrate the variation in catalytic coke and cat/oil coke with unit cell size of straight and combined catalysts of the present invention;

Figures 3 and 5 illustrate the variation in total coke make obtained with combined catalysts of the present invention of varying unit cell size; and

Figure 7 illustrates the variation in activity obtained with catalysts of the present invention as a function of steaming temperature and unit cell size.

Zeolite containing microspheres usable as the starting materials for the present invention can be prepared substantially in accordance with the teachings of U.S. Patent 4,493,902. It is preferred to form the Y-faujasite by crystallization reactions occurring within the macropores (over 60 nm) of the microspheres. Herein formation of the zeolite in this fashion is referred to as "in-situ crystallization" and the resulting product as "in-situ crystallized Y-faujasite." In-situ crystallization is extremely advantageous as it leads to particles having the desirable pore structures described herein as well as particles having selectivities which are advantageous as compared to seemingly similar catalysts prepared by the technique of forming particles by combining previously synthesized zeolite into a silica alumina hydrosol/clay matrix. Perhaps the most pronounced advantage of in-situ crystallization is found in the attrition resistance of the resulting particles. Catalysts formed according to this invention typically exhibit Engelhard Attrition Indices as defined in U.S. Patent 4,493,902 of from about 0.2 to about 1.0, usually from about 0.2 to about 0.5. These values are outstandingly low for any catalyst but are especially significant when compared to catalysts formed by incorporating zeolite into a silica alumina hydrosol/clay matrix. It is difficult to achieve attrition resistances which are even practical in incorporation catalysts when the zeolite content approaches or exceeds 40%. Typical Engelhard Attrition Indexes for incorporation catalysts would substantially exceed 1.0, normally being at least about 1.5 to 2.0 for catalysts having the very large zeolite contents required for the present invention.

6

Preferred starting compositions are prepared in accordance with Example I of USP 4,493,902 with the exception that the rare earth exchanges are omitted. Thus, these starting products formed are substantially the same as those described in the first part of Example I (through line 23) of the above-mentioned U.S. Patent. The unit cell size of the zeolite in the microspheres is desirably from about 2.464 nm to about 2.473 nm. The silica to alumina ratio of the zeolite is from about 4.1 to about 5.2 with a unit cell size of from about 2.464 to 2.473 nm, while the overall silica to alumina ratio is from about 1.7 to about 3.4. It is important that the content of Y-faujasite in the starting microspheres exceed about 40% by weight, preferably in the range of from about 50 to 70% Y-faujasite by weight, so that the desirable combination of properties (including activity, selectivities and octane-producing ability) of the finished catalyst may be obtained. There is no reason not to use zeolite contents in excess of 70% so long as the structure of the resulting microspheres is acceptable. The corresponding surface areas will range from about 300 to about 750 $m^2/g$. The micropore structure of the finished catalyst does not differ substantially from that of the starting material so it is also important to control the pore structure of the starting microspheres particularly so that the desirable coke selectivity properties of the catalysts of the present invention may be obtained. In this regard, it is best that the volume of pores in the 2 to 10 nm range be from about 0.02 to about 0.25 cc/g. In the catalysts having the more preferred pore structures, the volume of pores in the 2 to 10 nm range will be from about 0.05 to about 0.20 cc/g while the volume of pores in the 60 to 2,000 nm range will be less than about 0.2 cc/g. The micropore volume of the zeolite containing particles may be modified and controlled using silica retention. Silica retention may be also used to modify other characteristics of the pore structure of the microspheres if desired.

In the most preferred embodiments for the purposes of the present invention, microspheres will be prepared by external initiation using clear zeolite initiators with sodium silicate serving as a binder throughout the spray drying procedure and thereafter.

For the products prepared using external initiation, I prefer to use clear initiator to avoid the formation of excessive fines during crystallization. However, it is possible to achieve satisfactory results using internal initiation or cloudy initiator or a combination of the two.

After the zeolite has crystallized, silica retained (if desired), and the microspheres have been recovered and dried, the sodium content of the zeolite should be reduced in one or more stages comprising sequential ammonium exchange and calcination steps to form microspheres containing reduced cell size Y-faujasite. The overall sodium content should eventually be reduced to less than about 1.5% (based on the weight of the catalyst). In the laboratory, it was found desirable to conduct 2 ammonium exchanges on the dried catalyst prior to the first calcination step. Desirably, these exchanges are achieved by slurrying the catalyst at from about 30% to about 40% by weight solids in a 180°F $2\underline{N}$ ammonium nitrate solution maintained at a pH in the neighborhood of 3.0 by addition of nitric acid and stirring for a period of time ranging from about 10 minutes to several hours.

After ammonium exchange, the microspheres are calcined in the presence of steam. Typically, the cell size of the zeolite as measured subsequent to the initial ion exchange and calcination step should be reduced by at least about 0.001 to 0.002 nm. The sodium content subsequent to the initial ammonium exchange will usually be around 3%. Increasing activity of the finished catalyst is associated with increased sodium levels in the catalyst subsequent to the initial ammonium exchange but prior to the first calcination so long as the final surface area remains above 250 $m^2/g$, preferably above 300 $m^2/g$, more preferably above 325 $m^2/g$ and most preferably above 350 $m^2/g$. Preferably the $Na_2O$ level should be between about 7% and about 2.0% to achieve optimal activity. Optimal results in terms of gasoline yield, octane rating and activity seem to be obtained by a 2.5 to 3.5% $Na_2O$ content in the catalyst cake prior to the first calcination.

Typical calcination temperatures and times for the first calcination range from about 700° to about 1,600°F, preferably 900 - 1,500°F, more preferably 1,000-1,500°F, for from about 1 to 10 hours with the provisoes that it is important not to abuse the zeolite so severely that the cage structure collapses during calcining but it is important to calcine severely enough that residual sodium can be removed subsequently without triggering collapse of the zeolitic cage structure during the subsequent ammonium exchanges. Calcining at 1,000°F for about 3 hours seems to adequately satisfy both of these provisoes. About 15% by weight of added water seems to provide sufficient steam for the cell size reduction in closed systems. Subsequent to the initial calcination step, the unit cell size of the zeolite is preferably in the range of from about 2.460 nm to about 2.469 nm.

Paradoxically, the zeolite index (as determined using x-ray diffraction as compared to a standard of commercially pure sodium form Y-faujasite) has been found to often suggest that far more zeolite has been destroyed during the ammonium exchange and calcination steps than is the actual case thus suggesting that the ammonium exchange and calcination has been excessively severe. It is hypothesized that this apparent decrease in zeolite index is at least partly due to significant structural rearrangements of the zeolitic cage structure leading to shifting of the peak locations from those in the unexchanged, uncalcined product. Strangely enough, a considerable degree of decline in the apparent zeolite index is actually desirable in intermediate and final products and even though the apparent zeolite index may indicate that the percentage of zeolite has decreased dramatically, perhaps to as low as 10 or 12% zeolite, excellent products can still be obtained. It is thus considered extremely surprising that excellent results can be obtained with starting materials having zeolite indexes in the range of 50 - 70% even though the apparent zeolite index declines to less than 40, 30, or even 20 or less subsequent to the initial ion exchanges. After the initial ion exchange steps, the catalyst should be calcined in the presence of steam which is thought to be necessary to allow hydrolysis of aluminum in the zeolite lattice. Throughout this application, the phrase "apparent zeolite index" should be understood to be the number obtained by the following procedure: First, the sample is subjected to x-ray diffractometry for each of the regions indicated in Table A adjusting the detector in $2\theta$ increments of 0.01 and allowing it to remain at that increment for the indicated time. For each peak, the ratio of the counts so obtained to the number of counts so obtained for the standard is calculated, and the apparent zeolite index is then the arithmetic average of these 10 ratios expressed as a percentage.

10

## TABLE A

10 PEAK FAUJASITE APPARENT ZEOLITE INDEX

| Peak # | Lower Angle Limit 2θ | Upper Angle Limit 2θ | Scan Time at Each Inc. (Sec.) |
|---|---|---|---|
| 1 | 5.02 | 6.50 | 0.50 |
| 2 | 14.60 | 16.09 | 0.50 |
| 3 | 18.00 | 19.00 | 1.00 |
| 4 | 19.60 | 20.80 | 0.50 |
| 5 | 23.00 | 24.20 | 0.50 |
| 6 | 26.20 | 27.40 | 0.50 |
| 7 | 30.24 | 30.92 | 1.00 |
| 8 | 30.92 | 31.72 | 0.70 |
| 9 | 31.92 | 32.64 | 1.20 |
| 10 | 33.50 | 34.30 | 1.20 |

x-ray source: Copper K( ),( ) = 0.15418 nm.

After the first calcining, an additional ammonium exchange step may be carried out substantially as set forth above. Subsequent to these ammonium exchanges, it is preferred to calcine again at a temperature ranging from about 1,000°F to about 1,600°F even though an adequate calcination might be obtained in the regenerator of the FCC unit when the catalyst is added thereto. A separate calcination step is preferred as this seems to further stabilize the catalyst for any intermediate storage step and more importantly because control of humidity during calcining appears to be important in controllably stabilizing the zeolite and reducing unit cell size. A suitable combination of time, temperature and humidity is achieved by steaming at 1,500°F for 3 hours in a covered system in the presence of the water retained from washing subsequent to ammonium exchange. The resulting catalyst after this calcination should have a surface area of at least about 250 m$^2$/g, preferably over 300 m$^2$/g, usually less than 500 m$^2$/g, and most preferably in the range of from about 300 m$^2$/g to about 425 m$^2$/g. Even though the zeolite index as commonly computed for these catalysts does not precisely correlate with zeolite content, it appears that a surface area of 350-425 m$^2$/g corresponds to a zeolite content substantially in excess of 40% reduced cell size Y-faujasite by weight. Surprisingly, the apparent zeolite index of the finished product will often be less than 40, 30 or even 20, and yet excellent results are obtained. Excellent results have been obtained with finished products exhibiting apparent zeolite indexes of about 10 to 12%. After ammonium exchange, the filtered, dried and calcined product exhibits reduced unit cell size, reduced sodium content of less than 1.5% and often exhibits markedly reduced zeolite index (measured as described above) which is at least about 20, usually at least about 30, and frequently as much as 50 points below that of the starting material.

Although the preferred method of reducing the unit cell size is by a combination of ammonium exchange and calcination steps, it is within the scope of the present invention to reduce the cell size by such well known methods as dealumination with hydrochloric acid or chelation with ethylene diamine tetra acetic acid, oxalic acid, reaction with tetrachlorosilane and the like. In many cases, these techniques can also be used subsequent to the combination of ammonium exchange and calcination steps to further reduce cell size. I have prepared catalysts of the present invention having cell sizes as low as 2.424 nm by HCl leaching subsequent to ammonium exchange and calcination.

The finished catalytic microspheres of the present invention should exhibit a rare earth oxide content (based on the weight of the catalyst) of less than 2.5%, preferably less than 2.5%, and more preferably are substantially free of rare earth oxides and most preferably should also be substantially free of compounds of the transition metals such as iron, cobalt, nickel and the platinum group metals. By substantially free of these metals, we mean that the amount present should not greatly exceed the amount typically found as contaminants in the raw materials. For the iron group metals, the rare earth oxides and the transition metals other than the platinum group metals, "substantially free" should be understood to correspond to a content of these impurities of less than about 1.0%. Increased amounts of rare earths will usually lead to decreased gasoline octane yield from the products.

Since the platinum group metals and their sulfides and oxides are so much more catalytically active than the others, in this context "substantially free" should be understood to correspond to a content of less than about 0.01%. As alluded to previously, the pore structure of these catalysts forms an important part of this invention, particularly insofar as it relates to selectivity properties, particularly in regard to coke, hydrogen, dry gas and gasoline selectivities. The volume of pores ranging in size from 2 to 10 nm in catalysts of this invention is e.g. from about 0.02 to about 0.25 cc/g. In preferred embodiments of this invention, the volume of pores ranging from 2 to 10 nm (micropore volume) will be from about 0.05 to 0.20 cc/g, and the volume of pores ranging from 60 to 2,000 nm will be less than about 0.2 cc/g. In more preferred embodiments, the micropore volume will be from about 0.08 to about 0.15 cc/g, and in still more preferred embodiments, the micropore volume will be from about 0.08 to about 0.10 cc/g, while the total porosity (2 nm plus) will be less than about 0.5 cc/g (or even less than 0.25 cc/g).

In catalysts of this invention, the unit cell size of the Y-faujasite will be reduced by e.g. at least 0.003 nm, preferably at least about 0.005 nm, more preferably at least about 0.10 nm, from the initial cell size of the Y-faujasite in the starting materials. In other preferred embodiments, the unit cell size will be less than 2.460 nm, and more preferably will be less than 2.455 nm. There is no known lower limit on cell size but, based on the available data, the most preferred catalysts will have Y-faujasite exhibiting a unit cell size of from about 2.435 nm to about 2.455 nm, but from a practical point of view, bearing in mind that selectivities at 70% conversion are most relevant, it appears to be quite satisfactory to use catalysts having a unit cell size of from about 2.450 to 2.460 nm since the cost of reducing unit cell size increases drastically with increasing reduction.

The sodium content of the catalyst of this invention is usually under 1.5% by weight based on the total weight of the catalyst including both zeolite and matrix. In preferred embodiments, the sodium content (as $Na_2O$) will be less than 1.0%, and more preferably less than 0.8%. Catalyst according to this invention will often be calcined only once since the final calcination is

14

obtained where the catalyst is added to the regenerator. In that case, the cell size is predominately controlled by the final $Na_2O$ content which optimally is in the range of from 0.2 to about 0.8% by weight, more preferably in the range of from about 0.25 to about 0.5% by weight. In the most preferred embodiments, the sodium content will be in the range of from about 0.3 to about 0.5% by weight again based on the total weight of the catalyst. The preferred catalysts of this invention will be prepared from starting materials containing Y-faujasite having a silica to alumina mole ratio in excess of 4.5, more preferably in excess of 4.8.

## EXAMPLE I

A sample of sodium form High Zeolite Catalyst prepared as in Example I of U.S.P. 4,493,902 was used in this study. After crystallization and drying, a batch of this material was initially ammonium exchanged twice, each time by slurrying the catalyst at 35% solids in a 2 $\underline{N}$ $NH_4NO_3$ solution maintained at pH=3.0 by addition of $HNO_3$, heating with stirring to 180°F for one hour, and filtering. After oven drying, this sample had a sodium content of 2.78% $Na_2O$, a zeolite index of 51, and a zeolite unit cell size of 24.72 angstroms.

A 600 g sample of the resulting catalyst containing 2.78% $Na_2O$ was packed into a covered cordierite calcining tray and wetted with 100 ml $H_2O$ so as to provide steam during calcination (which aids in unit cell size reduction). The sample was then calcined at 1,000°F for 3 hours. After calcination, the catalyst was again ammonium exchanged twice by the same procedure as before. After filtering, the moist catalyst cake was packed into the covered cordierite tray and calcined a second time at higher temperature, 1,500°F for 3 hours. The finished catalyst contained 0.46% $Na_2O$ and had a surface area of 345 $m^2/g$ with a zeolite unit cell size of 24.40 Å.

15

Throughout this application, all percentages are in weight % unless otherwise indicated.

## EXAMPLE II

The catalyst prepared in Example I was subjected to Engelhard's modified MAT as described in the above-mentioned U.S. Patent Applications (incorporated herein by reference) after steaming in 100% steam at the indicated temperatures for 4 hours.

16

## TABLE I

HYDROTHERMAL STABILITY OF
EXPERIMENTAL OCTANE CATALYST

| Steaming Temperature | MAT Conversion, % |
|---|---|
| 1,400 | 87.6 |
| 1,450 | 82.5 |
| 1,500 | 81.3 |
| 1,550 | 67.1 |

These results demonstrate the surprising activity of the catalysts of the present invention.

17.

## EXAMPLE III

Since it will often be advantageous to combine the zeolite containing microspheres with less catalytically active additives, samples of the steamed catalyst were combined 1:1 with steamed additive microspheres (AM) of calcined kaolin as described in U.S.P. 4,493,902 to lower activity to the conventional MAT testing range, and these were evaluated for selectivity by further MAT testing. Samples of a commercially available high activity catalyst (HACC), Ultrasiv $^R$ 260, and a commercially available competitive octane catalyst (COC), which were steamed in an identical manner (but not combined with additive microspheres) were used as controls for comparison. Selectivity data shown in Table II clearly demonstrates the superior performance of the catalyst of this invention, particularly in coke and gasoline yields. The commercially available competitive octane catalyst is thought to be prepared from calcined, reduced unit cell size Y-faujasite distributed within a matrix of kaolin clay and a silica alumina hydrosol binder.

18

## TABLE II

### SELECTIVITIES OF THE EXPERIMENTAL OCTANE CATALYST
### vs. HIGH ACTIVITY COMMERCIAL CATALYST AND COMPETITIVE OCTANE CATALYST

| | | Conversion Level % | | |
|---|---|---|---|---|
| | | 65 | 70 | 75 |
| 1. Coke Make | Exp. Catalyst/AM | 3.22 | 3.63 | 4.21 |
| | HACC | 3.74 | 4.31 | 5.11 |
| | COC | 3.51 | 4.16 | 5.07 |
| 2. Gasoline Yield | Exp. Catalyst/AM | 49.8 | 53.1 | 55.8 |
| ($C_5$-421°F Boiling) | HACC | 49.8 | 52.8 | 55.2 |
| | COC | 47.1 | 49.9 | 52.1 |
| 3. Gas Yield $C_4^-$ | Exp. Catalyst/AM | 12.0 | 13.3 | 15.0 |
| | HACC | 11.5 | 12.9 | 14.7 |
| | COC | 14.4 | 15.9 | 17.8 |
| 4. LCO Yield | Exp. Catalyst/AM | 21.2 | 19.2 | 17.0 |
| (421-602°F Boiling) | HACC | 21.8 | 19.5 | 16.9 |
| | COC | 20.2 | 18.2 | 16.1 |
| 5. Bottoms | Exp. Catalyst/AM | 13.8 | 10.8 | 7.97 |
| (602°F + Boiling) | HACC | 13.2 | 10.5 | 8.10 |
| | COC | 14.8 | 11.8 | 8.91 |
| 6. $i-C_4/C_4^=$ Molar Ratio | Exp. Catalyst/AM | 1.18 | 1.48 | 1.90 |
| | HACC | 1.32 | 1.72 | 2.30 |
| | COC | 1.45 | 1.88 | 2.50 |

It should be noted that the $i-C_4/C_4^=$ molar ratio obtained using the experimental catalyst combined with the additive microspheres is significantly lower than that obtained with either the high activity commercial catalyst or the competitive octane catalyst, indicating a higher olefinicity in the gaseous products which is consistent with the higher olefin content of the liquid product producing improved octane performance for the experimental catalyst.

EXAMPLE IV

To illustrate even more dramatically the surprising combination of good gasoline selectivity and high octane of the large amount of gasoline obtained using catalysts of the present invention, further testing was carried out on these three catalysts in a laboratory scale FCC pilot unit using a large sample of catalyst of the present invention prepared as described previously. The pilot plant was operated at a catalyst to oil ratio of 11.07, a contact time of 1.9 sec., a regenerator temperature of 1251°F, and a reactor temperature of 973°F.

This sample had a zeolite unit cell size of 24.37 $\overset{\circ}{A}$ and a sodium content of 0.49%. After steaming at 1,450°F, the catalyst was combined with additive microspheres to result in a nominal MAT conversion of approximately 70%. FCC pilot unit results obtained with this catalyst, the high activity commercial catalyst and the competitive octane catalyst are shown in Table III.

· 20

## TABLE III

### FCC PILOT UNIT SELECTIVITY RESULTS
### EXPERIMENTAL OCTANE CATALYST vs. HACC AND COC

Data Adjusted to 70% Conversion

| Yields, wt. % | Exp. Cat/AM | HACC | COC |
|---|---|---|---|
| Gasoline | 55.3 | 53.3 | 52.5 |
| LCO | 18.7 | 19.0 | 18.4 |
| Bottoms | 11.3 | 11.0 | 11.6 |
| Gas, $C_4^-$ | 12.8 | 14.4 | 15.3 |
| Coke | 1.92 | 2.33 | 2.22 |
| RON | 91.3 | 88.8 | 90.8 |
| MON | 79.6 | 79.4 | 79.0 |

It is quite surprising and unexpected that the catalyst of this invention performs this well relative to the control catalysts which are regarded as exceptional throughout the industry in terms of low coke make and high octane. It is thought that the reason for the excellent performance of the experimental catalyst is due in part to the magnitude of the zeolite unit cell size, the method of preparation, and the nature of the unique nature of the starting catalyst. The results presented are the yields expected at 70% conversion as computed by correlating results obtained at a number of conversions ranging from about 67.4% to about 69.7% in accordance with well known procedures.

· 21

## EXAMPLE V

In this Example, the major reduction in unit cell size is effected in the second calcination step, which may be carried out at different temperatures, thereby resulting in a range of catalysts of differing zeolite unit cell sizes and possessing different catalytic properties. A series of such catalysts were prepared by varying the second calcination temperature; other aspects of the synthesis procedure being identical to that described previously. MAT testing of these catalysts as 1:1 combinations with additive microspheres suggests that the reduced zeolite unit cell size is at least partly responsible for the low coke make observed with the previous preparation. This data is shown in Table IV.

· 22

## TABLE IV

EFFECTS OF ZEOLITE UNIT CELL SIZE ON COKE MAKE
OF EXPERIMENTAL OCTANE CATALYSTS

| Calcination Temperature (Initial/Final) | UCS nm | Coke Make at % Conversion | | |
|---|---|---|---|---|
| | | 65 | 70 | 75 |
| 1000/- (No final Calcination) | 2.469 | 3.36 | 4.09 | 5.12 |
| 1000/1000 | 2.452 | 3.25 | 3.72 | 4.39 |
| 1000/1200 | 2.444 | 3.32 | 3.89 | 4.68 |
| 1000/1500 | 2.440 | 3.22 | 3.63 | 4.21 |

It is apparent from this data that the zeolite unit cell size is an important factor regarding the experimental octane catalysts selectivity profile and that reduced unit cell size is associated with lower coke make.

. 23

## EXAMPLE VI

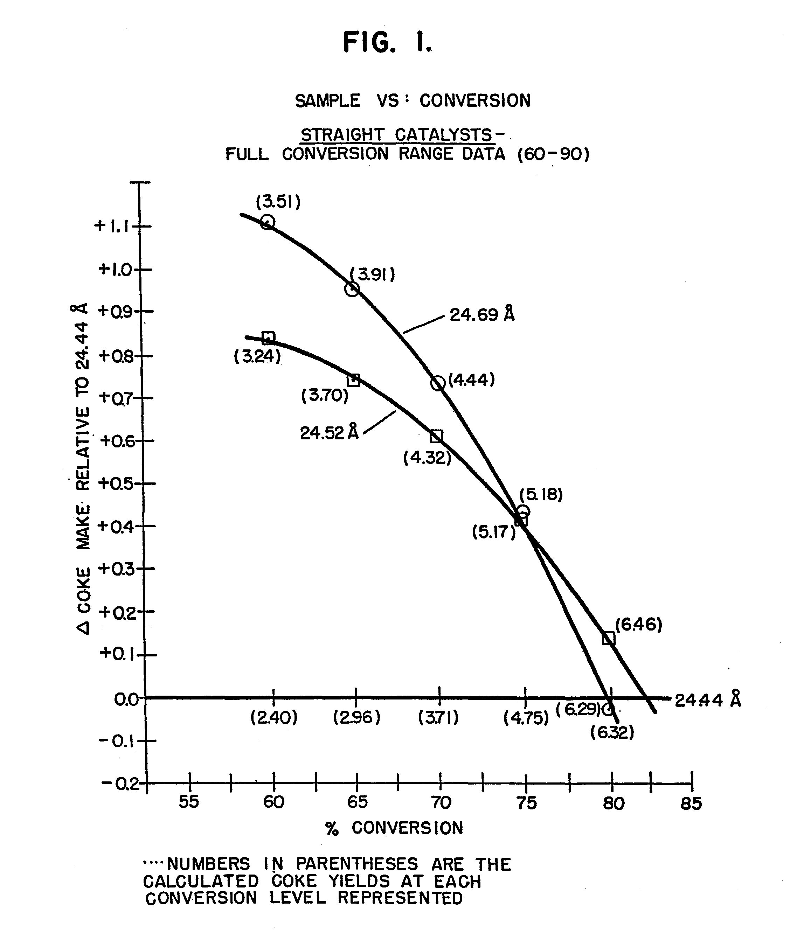

To further illustrate the effects of cell size on the selectivity properties of the catalysts of the present invention, coke make was determined using a variety of catalysts of varying unit cell size as set forth in the accompanying figures. In Figure 1, the difference is plotted between the coke make obtained with unblended catalysts of this invention having a unit cell size of 2.444 nm and the coke make obtained with other unblended catalysts of this invention having unit cell sizes of 2.469 nm and 2.452 nm respectively. It should be emphasized that these data were obtained and correlated using results obtained of conversion levels varying from 60 to 90. It is thought that inclusion of the data obtained at the highest conversions in the correlations tends to exaggerate somewhat the tendency of the catalyst to make coke at lower conversion levels, but meaningful interpretations can still be obtained from the data presented. The numbers indicated by each catalyst's curve in parentheses are the coke make in % calculated for that catalyst at that conversion level.

Coke make of catalysts are usually correlated using the formula:

$$\% \text{ Coke} = A \text{ (activity)} + B$$

$$\text{where activity} = \frac{\% \text{ Conversion}}{100 - \% \text{ Conversion}}$$

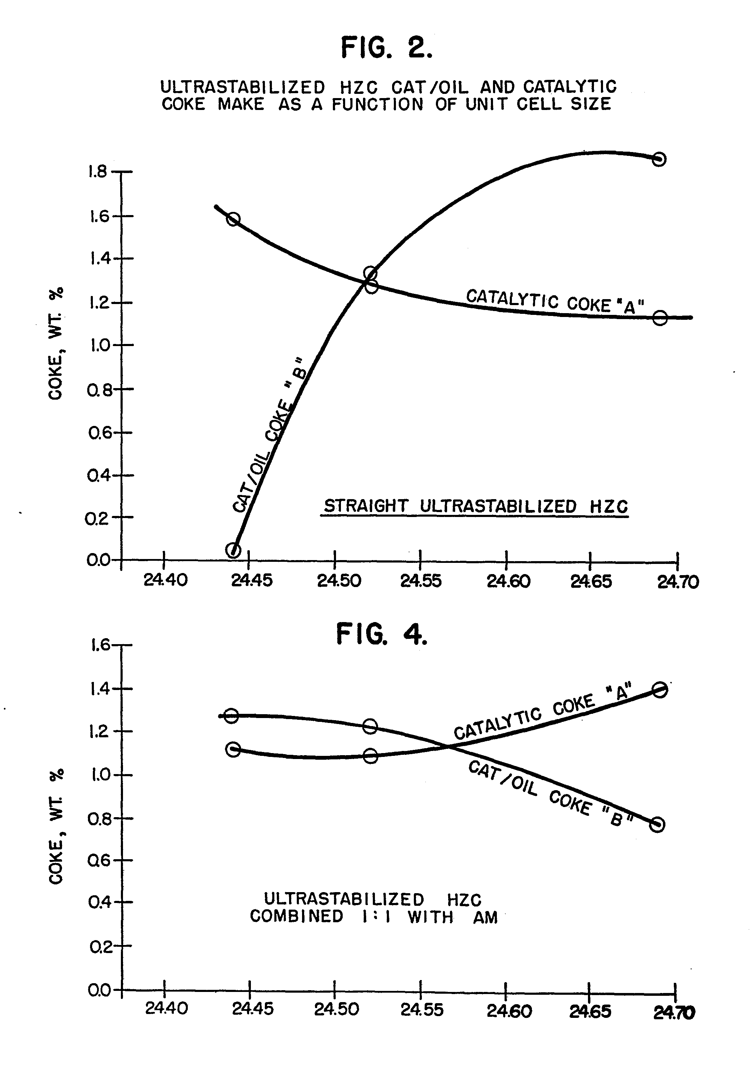

where "A" is commonly referred to as the catalytic coke and "B" is commonly referred to as the cat/oil coke. The data referred to in this Example was further analyzed to determine the variation in catalytic coke and cat/oil coke with unit cell size. This data is presented in Figure 2.

24

## EXAMPLE VII

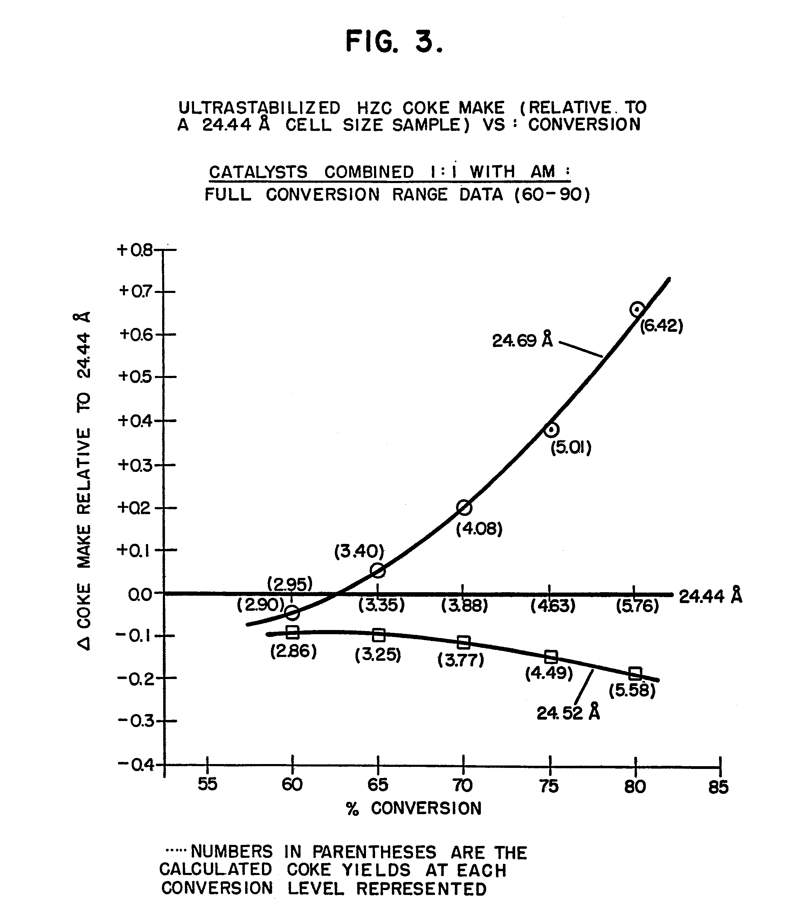

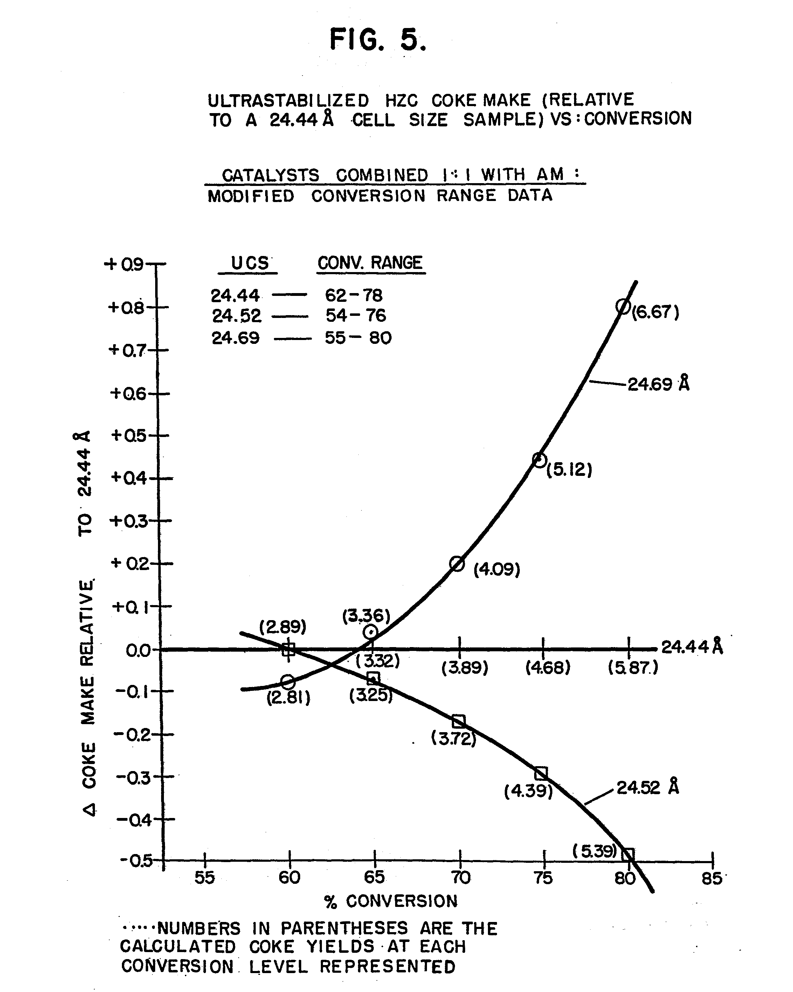

The procedure of Example VI was repeated with microspheres of the present invention of varying unit cell sizes as described above combined 1:1 with additive microspheres. The difference between the coke makes of the catalysts containing 2.469 nm and 2.452 unit cell size Y-faujasite and the coke make of the catalyst containing 2.444 nm Y-faujasite are set forth in Figure 3 where the numbers set forth in parentheses are the calculated coke make in % for that level of conversion. Figure 4 illustrates the variation in catalytic coke "A" and cat/oil coke "B" with unit cell size for these catalyst compositions.

The data referred to above were reanalyzed and correlated omitting results obtained at very high conversion levels to yield correlations which I believe will be more meaningful over the range of conversions normally encountered in usual commercial operations. The results are presented in Figure 5.

In Figures 3 and 5, it is especially important to note the extremely low coke make obtained with the Y-faujasite catalysts having a unit cell size of 2.444 nm and 2.452 nm when the catalysts are combined with additive microspheres.

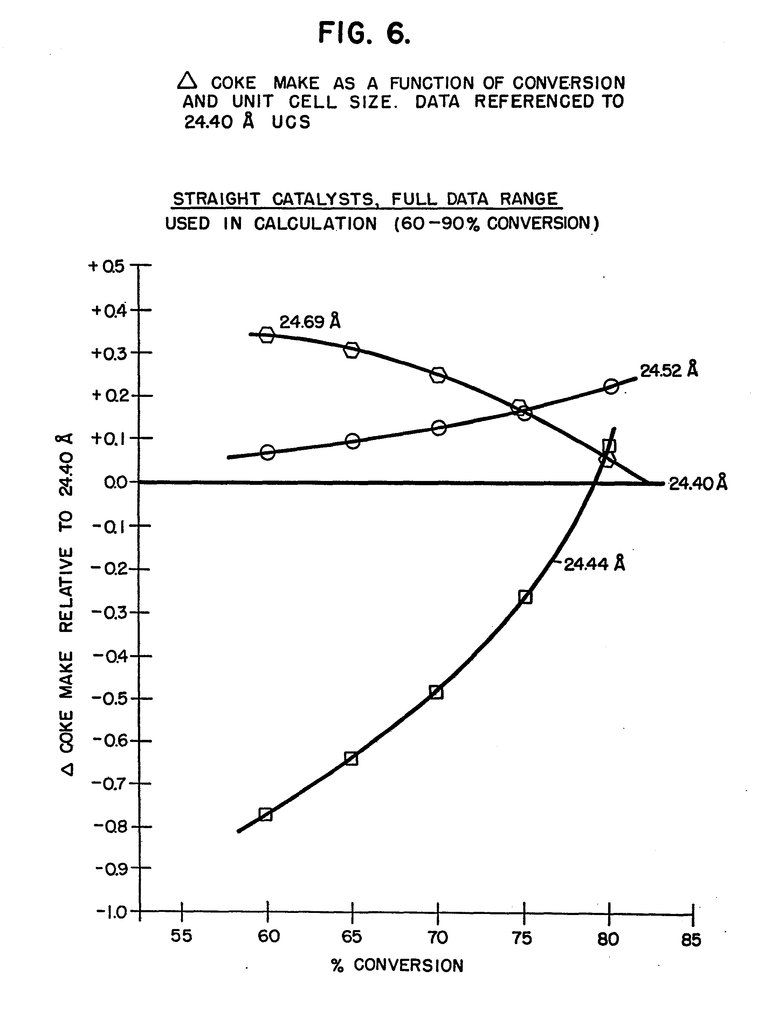

Figure 6 illustrates the relative coke make of straight (uncombined) catalysts of unit cell size 2.440 nm, 2.444 nm, 2.452 nm and 2.469 nm obtained using correlations over the full 60 to 90% range of conversions.

## EXAMPLE VIII

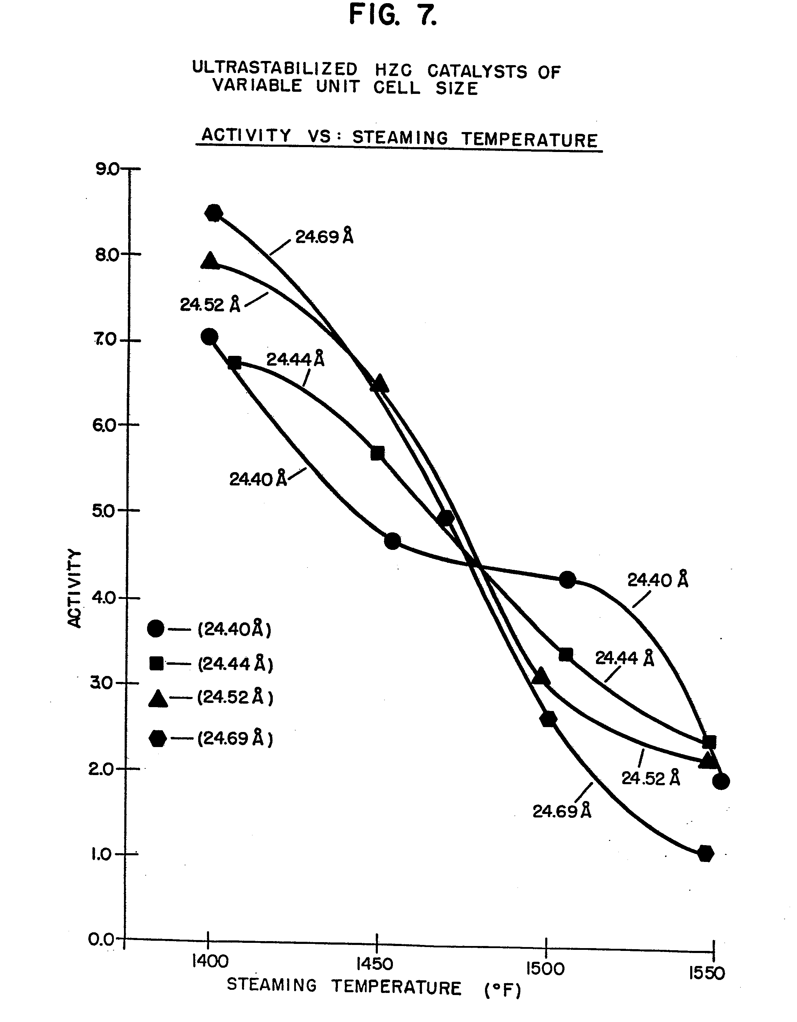

Catalysts as described above were subjected to the microactivity test described above subsequent to steaming at the indicated temperatures for 4 hours in 100% steam. The activities obtained are presented in Figure 7.

## EXAMPLE IX

To illustrate that reduction of unit cell size alone in Y-faujasite catalysts does not necessarily yield the desirable combination of selectivities obtained with the present invention, a series of comparative catalysts were prepared as follows.

As a control, Y-faujasite containing catalyst bound by a silica/alumina hydrosol was prepared substantially as set forth in Examples 1 and 2 of U.S.P. 3,957,689 except that the silica alumina hydrosol was not prepared using a solution of sodium silicates but instead a comparable solution of recycled mother liquor from crystallization of Y-faujasite was used. The final molar $SiO_2/Al_2O_3$ and $Na_2O/SiO_2$ ratios were corrected to the ratios specified in that patent by addition of an appropriate quantity of sulfuric acid in the preparation, this being necessary due to the greater $Na_2O$ content in the mother liquor. The silica alumina hydrosol, LZY-62 (an ammonium form Y-faujasite sold commercially by Linde Division of Union Carbide) and kaolin were combined in the weight ratios (dry basis) set forth below:

|  |  |
|---|---|
| LZY-62 | 20% |
| Si/Al hydrosol | 25% |
| kaolin | 55% |

The resulting material was spray dried to obtain microspheres having diameters in the neighborhood of 65 to 70 microns.

To form a comparative reduced cell size Y-faujasite catalyst, reduced unit cell size Y-faujasite was prepared by calcining from LZY-62 at 1,000°F in the presence of 15 wt. % water for 3 hours. Following calcination, the LZY-62 was exchanged twice by slurrying in a 2N NH₄NO₃ solution at 35% solids maintained at pH 3 by addition of nitric acid. Subsequently, the zeolite was calcined at 1,500°F for 3 hours in 15% steam. Thus, the preparation is comparable to that previously set forth for preparation of catalysts of this invention, but the zeolite was not crystallized in situ. The resulting material was incorporated into a catalyst by mixing it with silica alumina hydrosol as above, except that the following proportions were used in order to compensate for the lower activity expected from a catalyst containing ammonium form zeolite.

| | |
|---|---|
| Reduced Cell Size LZY-62 | 30% |
| Silica alumina hydrosol | 25% |
| kaolin | 45% |

The resulting material was spray dried to form microspheres as above.

Both catalyst compositions were then separately slurried in water at 180°F at a pH of 4.0 to 4.5, then filtered. The filter cake was then slurried for 20 minutes at 35 wt. % solids in a 2$\underline{N}$ solution of ammonium nitrate maintained at 180°F, pH 4.0 - 4.5 by addition of $HNO_3$ then filtered. The filter cake was then washed by slurrying twice more in 180°F water at pH 4.0 to 4.5 then filtered, oven dried and analyzed for sodium. The sodium content of the reduced cell size catalyst was found to be 0.27%.

The comparative reduced cell size catalyst sample was then ready for testing. The control catalyst was then rare earth exchanged twice to impart the stability necessary for use in commercial FCC units as follows: The microspheres were slurried at 35 wt. % solids in a rare earth oxide containing solution maintained at pH 3.5 - 4.0 for about 1 hour, then washed and dried. The amount of rare earth oxide in the solution was approximately 3½% of the weight of the catalyst, while the pickup was approximately 2.5% of the weight of the catalyst. Physical properties and compositions of the reduced cell size comparative catalyst and control catalyst were found to be as set forth in Table V which also summarizes these properties for a catalyst of the

27

present invention. Catalysts similar to that used as the control which are not stabilized in some fashion, such as by reducing the unit cell size or by rare earth exchange, would fail to provide commercially comparable stability.

28

## TABLE V

|  | Reduced Cell Size Catalyst | Control Catalyst | Catalyst of this Invention |
|---|---|---|---|
| $\%Na_2O$ | 0.27 | 0.68 | 0.47 |
| Rare Earth Oxides, % | - | 2.46 | - |
| Zeolite Index, % Y-faujasite * | 36 | 12 | 10 - 40 |
| Unit Cell Size (nm) | 2.439 | 2.467 | 2.440 |
| EAI, % Loss/Sec. | 1.5, 1.7 | 1.4, 1.5 | 0.2 - 1.2 |
| Bulk density g/cc | 0.74, 0.75 | 0.83, 0.84 | 0.80 - 0.98 |
| Surface Area $m^2/g$ | 189 | 153 | 336-345 |
| Pore Volumes cc/g |  |  |  |
| 2-10 nm | 0.055 | 0.031 | 0.181 |
| 10-60 nm | 0.052 | 0.042 | 0.082 |
| 60-2000 nm | 0.310 | 0.282 | 0.214 |

* questionable correlation, see discussion in text.

To illustrate the comparative performance of these catalysts, microactivity tests after steaming for 4 hours at the indicated temperatures were conducted with results indicated in Tables VI and VII.

## TABLE VI

### MICROACTIVITY AFTER STEAMING

| | Clay/Hydrosol Matrix | | | |
|---|---|---|---|---|
| Steaming Temp | Reduced Cell Size Catalyst | Control Catalyst | Catalyst of this Invention 1:1 Exp.Cat./AM | Catalyst of this Invention Straight |
| 1400 | 73.7 | 77.3 | 78.9 | 87.6 |
| 1450 | 65.8 | 70.0 | 70.9 | 82.5 |
| 1500 | 60.1 | 52.8 | 66.5 | 81.3 |
| 1550 | 53.1 | 15.9 | 53.5 | 67.1 |

31

## TABLE VII

### COMPARATIVE MAT SELECTIVITY RESULTS
### (DATA ADJUSTED TO 70% CONVERSION)

| | Reduced Cell Size Comparative Catalyst | | Control Catalyst | Catalyst of this Invention 1:1 Exp.Cat./AM |
|---|---|---|---|---|
| | 1st Run | Recheck | | |
| Coke | 3.29* | 3.59 | 3.81 | 3.63 |
| Gasoline Selectivity | 52.4 | 51.1 | 54.4 | 53.1 |
| $C_4^-$ | 14.3 | 15.3 | 11.8 | 13.3 |
| Light Cycle Oil | 18.4 | 18.2 | 18.2 | 19.2 |
| Bottoms | 11.6 | 11.8 | 11.8 | 10.8 |

* questionable validity data point. The measured value of coke make originally obtained was 3.29 which was considered extremely low by the present inventor. A recheck of the results from another portion of the same Comparative Catalyst yielded the results set forth in the recheck column of Table VII which are believed to be more reliable.

The results set forth in Tables VI and VII indicate that the reduced cell size comparative catalyst exhibits lower gasoline selectivity than either the control or the catalyst of this invention while the activity of the catalyst of this invention is superior to that of either the control catalyst or the reduced cell size comparative catalyst. Thus, the improvement obtained in octane number is accompanied by an unexpectedly high gasoline selectivity, and a reduction in bottoms as well as an improvement in activity.

32

## EXAMPLE X

To compare the selectivity and activity properties of the catalyst microspheres of the present invention to microspheres made according to U.S. Patent 4,493,902, microspheres were prepared following the procedure of Example I of that patent having a $Na_2O$ content of 0.27% and a rare earth oxide content of 8.72%. To reduce the activity to within the range normally acceptable for commercial operations and standard microactivity testing, 1 part by weight of these catalytic microspheres were combined with 3 parts by weight of additive microspheres prepared as described in that patent. The results of microactivity tests on the combined composition are set forth in Table VIII.

33

## TABLE VIII

MAT SELECTIVITIES * OF 1 PART HZC (0.27% $Na_2O$);
8.72% ReO + 3 PARTS AM

|  | Conversion, % | | | | |
|---|---|---|---|---|---|
|  | 60 | 65 | 70 | 75 | 80 |
| Coke | 2.52 | 2.98 | 3.58 | 4.43 | 5.70 |
| Gasoline | 47.2 | 50.3 | 53.0 | 55.0 | 55.8 |
| Gas, $C_4^-$ | 10.3 | 11.7 | 13.4 | 15.6 | 18.5 |
| LCO | 23.2 | 21.5 | 19.4 | 17.2 | 14.8 |
| Bottoms | 16.8 | 13.5 | 10.6 | 7.76 | 5.16 |
| $i\text{-}C_4/C_4^=$ | 1.31 | 1.56 | 1.89 | 2.34 | 2.98 |

*    Conv. range 39-76

34

Comparison of Tables VIII and II reveals that the substantial increase in octane obtained with the catalysts of the present invention has not been obtained at the price of a substantial decline in gasoline selectivity. For example, at the 70 and 75% conversion levels, the gasoline yield obtained with the catalysts of the present invention slightly exceeds that of the rare earth exchanged high zeolite catalyst, while at 65% conversion, the decline is not excessive. The isobutane to $C_4$ olefins ratios obtained in both examples are consistent with the improved octane obtained with the reduced cell size high zeolite catalyst as demonstrated in the other examples.

35

## EXAMPLE XI

To demonstrate the effect of rare earth oxides on the activity of catalysts of the present invention, a sample of catalyst prepared as in Example I was rare earth exchanged to a level of 0.67%. Comparative microactivity data, after steaming for 4 hours at the indicated temperatures, is set forth in Table IX to illustrate the comparative stability of the two catalysts.

36

## TABLE IX

| Steaming Temperature | Catalyst 1, UCS 2.440 nm 0.46% $Na_2O$, O.O REO | Catalyst 2, UCS 2.441nm 0.40% $Na_2O$, 0.67% REO |
|---|---|---|
| 1400 | 87.6 | 84.7 |
| 1450 | 82.5 | 81.8 |
| 1500 | 81.3 | 77.4 |
| 1550 | 67.1 | 70.5 |

It is important to note that exchange of a small amount of rare earth improved activity only at very high steaming temperature (1550°F), whereas at lower steaming temperature the activity was actually lowered by rare earth exchange. This is unusual in that rare earth exchange normally results in increased catalytic activity and hydrothermal stability.

## EXAMPLE XII

To illustrate the effect of rare earth oxides on selectivities, samples of catalysts 1 and 2 from Example XI above were combined with equal weights of additive microspheres and MAT selectivities evaluated at 70% conversion. The results are presented in Table X.

0194101

38

## TABLE X

SELECTIVITIES OF REO AND REO FREE CATALYSTS

| | Catalyst 1, UCS 2.440 nm 0.46% Na$_2$O, 0.0 REO Combined 1:1 w AM * | Catalyst 2, UCS 2.441 0.40% Na$_2$O, 0.67% REO Combined 1:1 w AM ** |
|---|---|---|
| Coke Make | 3.63 | 3.54 |
| Gasoline Yield | 53.1 | 53.3 |
| Gas, C$_4^-$ | 13.3 | 13.2 |
| Bottoms | 10.8 | 10.8 |
| LCO | 19.2 | 19.2 |
| i-C$_4$/C$_4^=$ | 1.48 | 1.36 |

   *  Correlated over 52-72% Conversion

  **  Correlated over 60-76% Conversion

39

Thus, it can be seen that the selectivities are very similar, but there is a slight indication of improved gasoline yield (which would be expected of a rare earth exchanged catalyst) as well as lowered coke make (not expected) for the rare earth exchanged system. Even more surprising is that the $i-C_4/C_4^=$ ratio has not increased with rare earth exchange, which would normally be expected due to promotion of hydrogen transfer reactions by rare earth ions, resulting in a loss in gaseous and liquid product olefinicity. An octane number measurement on the actual liquid syncrude would be necessary to determine whether or not there actually is a detrimental effect on octane with small levels of exchanged rare earth ions.

EXAMPLE XIII

To illustrate the variation in gasoline yield and olefinicity of the $C_4$ fractions, gasoline yields and the iso-butane to $C_4$ olefin ratios were measured as compared to prior art high zeolite catalyst (HZC) as described above and a competitive octane catalyst (COC) as described above. The results are summarized in Table XI.

40

## TABLE XI

GASOLINE YIELD AND $i-C_4/C_4^=$ MOLAR RATIO AS A FUNCTION OF UCS FOR
REDUCED CELL SIZE HIGH ZEOLITE CATALYST (AS COMPARED TO COC AND
HZC CONTROLS)

Selectivity @ 70% Conversion

| | UCS (Å) | Conversion Range Used in Correlation | Gasoline Yield | $i-C_4/C_4^=$ |
|---|---|---|---|---|
| Catalyst | 24.40 | 52-72 | 53.1 | 1.48 |
| of the | 24.44 | 49-78 | 53.0 | 1.60 |
| Present | 24.52 | 54-76 | 52.4 | 1.47 |
| Invention | 24.69 | 55-81 | 52.1 | 1.65 |
| | | | | |
| HZC Control | ca. 24.72 | 39-76 | 53.0 | 1.89 |
| | | | | |
| COC | --- | 57-77 | 49.9 | 1.88 |
| | | 47-80 | 51.1 | 1.69 |

It is important to note that the reduced cell size
HZC (the catalyst of this invention) has a gasoline yield
substantially equivalent to the HZC control, but with a
significantly lowered $i-C_4/C_4^=$ ratio. This data also
indicates that there is a 0.5 - 1% (abs.) gain in gasoline yield when UCS is lowered from 24.69 to 24.40. Both
of the high zeolite catalysts made much more gasoline
than the competitive octane catalyst.

41

## EXAMPLE XIV

To further illustrate the comparative performance of the prior art high zeolite catalyst of normal cell size, a sample of 25 % HZC and 75% AM was evaluated in a pilot plant using the feedstock set forth in Table XIII, the pilot plant being operated substantially as set forth in Example IV except that the catalyst to oil ratio was 9.11, the reactor temperature was 962°F, and the regenerator temperature was 1257°F. The results obtained (as adjusted to 70% conversion) are set forth in Table XII. It is quite surprising that the reduced cell size High Zeolite Catalyst made even more gasoline but substantially less coke than a comparable High Zeolite Catalyst of normal cell size which was stabilized with rare earth oxides. Further, these benefits were achieved while also obtaining an exceptionally high gasoline research octane number of 91.3. See Table III. Based upon my experience with rare earth oxide stabilized high zeolite catalysts, the research octane number should be considerably lower than that obtained with the catalyst of the present invention.

0194101

42

<u>TABLE XII</u>

PILOT PLANT TEST ON NORMAL CELL SIZE HIGH
ZEOLITE CATALYST

| | |
|---|---|
| Carbon on Spent Catalyst, % | 0.31 |
| Carbon on Regenerated Catalyst, % | 0.04 |
| Delta Carbon, % | 0.27 |

| Yields, % | Blend 75% AM/25% HZC |
|---|---|
| Conversion | 70.0 |
| (Activity) | 2.33 |
| Gasoline ($C_5$ - 421°F) | 54.77 |
| LCO (421 - 602°F+) | 18.63 |
| Bottoms (602°F+) | 11.37 |
| $C_4$ Minus | 12.63 |
| Coke | 2.60 |
| Total | 100.00 |
| $IC_4$ | 2.70 |
| $NC_4$ | 0.47 |
| $C_4=$ | 4.27 |
| Total $C_4$ | 7.44 |
| $C_3$ | 0.50 |
| $C_3=$ | 3.43 |
| Total $C_3$ | 3.93 |

43

## TABLE XII - Continued

### PILOT PLANT TEST ON NORMAL CELL SIZE HIGH ZEOLITE CATALYST

| Yields, % | Blend 75% AM/25% HZC |
|---|---|
| $C_2$ | 0.26 |
| $C_2=$ | 0.32 |
| $C_1$ | 0.43 |
| $H_2S$ | 0.17 |
| $H_2$ | 0.02 |
| Total $C_2$ and lighter | 1.26 |

44

TABLE XIII

ANALYSIS OF MIDCONTINENT GAS OIL FEEDSTOCKS

|  |  | Microactivity Test Feedstocks | Pilot Plant Feedstocks |
|---|---|---|---|
| API Gravity (@ 60°F) |  | 28.0 | 28.6 |
| Ramsbottom Carbon (wt %) |  | 0.26 | 0.22 |
| Simulated Distillation | IBP | 415°F | 322°F |
|  | 10% | 550°F | 485°F |
|  | 20% | 609°F | 560°F |
|  | 30% | 659°F | 620°F |
|  | 40% | 707°F | 665°F |
|  | 50% | 756°F | 702°F |
|  | 60% | 807°F | 739°F |
|  | 70% | 864°F | 777°F |
|  | 80% | 932°F | 820°F |
|  | 90% | 1030°F | 877°F |
|  | 92% | 1066°F | 891°F |
|  | 99% |  | 992°F |
| Total Sulfur (wt %) |  | 0.59 | 0.52 |
| Fe |  | 1 ppm | 0.76 |
| Cu |  | 3 ppm | 0.1 |
| Ni |  | 1 ppm | less than 1.0 |
| V |  | 1 ppm | less than 1.0 |
| Total Nitrogen |  | 903 ppm | 675 ppm |
| Basic Nitrogen |  | 139 ppm | 233 ppm |
| Pour Point |  | 90°F | 58°F |
| Bromine No. |  | 22 | -- |

45

## EXAMPLE XV

To illustrate the effects of unit cell size on selectivities, microactivity tests were run on samples of catalyst microspheres prepared as in Example V having unit cell sizes of 2.440 nm, 2.444 nm, 2.452 nm and 2.469 nm. In each run, the catalyst microspheres were combined with an equal weight of additive microspheres as described above. Table XIV summarizes the variation in gasoline yield obtained at the various unit cell sizes. Tables XV, XVI, XVII, XVIII and XIX summarize the variations in coke make, gas yield ($C_4^-$), iso-butane to $C_4$ olefin molar ratio, LCO yield, and Bottoms respectively.

46

TABLE XIV

GASOLINE YIELD %

| Unit Cell Size nm | Corr. Range | % Conversion | | | | |
|---|---|---|---|---|---|---|
| | | 60 | 65 | 70 | 75 | 80 |
| 2.440 | 52-79 | 46.4 | 49.6 | 52.4 | 54.6 | 55.7 |
| | 52-72 | 46.3 | 49.8 | 53.1 | 55.8 | 57.8 |
| 2.444 | 62-81 | 46.6 | 49.9 | 52.8 | 55.3 | 56.6 |
| | 62-78 | 46.5 | 49.9 | 52.9 | 55.3 | 56.9 |
| | 49-81 | 46.9 | 50.2 | 53.0 | 55.3 | 56.4 |
| | 49-78 | 46.9 | 50.2 | 53.0 | 55.3 | 56.4 |
| 2.452 | 54-82 | 46.1 | 49.6 | 52.5 | 55.1 | 56.6 |
| | 54-76 | 46.1 | 49.5 | 52.4 | 54.7 | 56.0 |
| 2.469 | 49-83 | 46.1 | 49.4 | 52.2 | 54.5 | 55.7 |
| | 55-81 | 46.2 | 49.3 | 52.1 | 54.2 | 55.2 |
| | 48-83 | 46.4 | 49.7 | 52.5 | 54.9 | 56.1 |
| | 48-81 | 46.3 | 49.6 | 52.4 | 54.5 | 55.7 |

0194101

47

TABLE XV

COKE MAKE %

| Unit Cell Size nm | Corr. Range | % Conversion | | | | |
|---|---|---|---|---|---|---|
| | | 60 | 65 | 70 | 75 | 80 |
| 2.440 | 52-79 | 2.83 | 3.28 | 3.89 | 4.74 | 6.02 |
| | 52-72 | 2.91 | 3.22 | 3.63 | 4.21 | 5.08 |
| 2.444 | 62-81 | 2.95 | 3.35 | 3.88 | 4.63 | 5.76 |
| | 62-78 | 2.89 | 3.32 | 3.89 | 4.68 | 5.87 |
| | 49-81 | 2.94 | 3.34 | 3.88 | 4.63 | 5.76 |
| | 49-78 | 2.93 | 3.35 | 3.90 | 4.68 | 5.84 |
| 2.452 | 54-82 | 2.86 | 3.25 | 3.77 | 4.49 | 5.58 |
| | 54-76 | 2.89 | 3.25 | 3.72 | 4.39 | 5.39 |
| 2.469 | 49-83 | 2.90 | 3.40 | 4.08 | 5.01 | 6.42 |
| | 55-81 | 2.81 | 3.36 | 4.09 | 5.12 | 6.67 |
| | 48-83 | 2.97 | 3.46 | 4.12 | 5.03 | 6.41 |
| | 48-81 | 2.97 | 3.49 | 4.17 | 5.13 | 6.57 |

0194101

48

<u>TABLE XVI</u>

GAS ($C_4^-$) YIELD %

| Unit Cell Size nm | Corr. Range | % Conversion | | | | |
|---|---|---|---|---|---|---|
| | | 60 | 65 | 70 | 75 | 80 |
| 2.440 | 52-79 | 10.8 | 12.1 | 13.7 | 15.7 | 18.3 |
| | 52-72 | 10.8 | 12.0 | 13.3 | 15.0 | 17.1 |
| 2.444 | 62-81 | 10.5 | 11.8 | 13.3 | 15.1 | 17.6 |
| | 62-78 | 10.6 | 11.8 | 13.2 | 15.0 | 17.2 |
| | 49-81 | 10.2 | 11.5 | 13.1 | 15.1 | 17.8 |
| | 49-78 | 10.2 | 11.5 | 13.1 | 15.0 | 17.6 |
| 2.452 | 54-82 | 11.0 | 12.2 | 13.7 | 15.4 | 17.8 |
| | 54-76 | 11.0 | 12.3 | 13.9 | 15.9 | 18.6 |
| 2.469 | 49-83 | 11.0 | 12.2 | 13.7 | 15.5 | 17.9 |
| | 55-81 | 11.0 | 12.3 | 13.8 | 15.7 | 18.1 |
| | 48-83 | 10.7 | 12.0 | 13.6 | 15.5 | 18.1 |
| | 48-81 | 10.8 | 12.1 | 13.7 | 15.8 | 18.5 |

0194101

49

## TABLE XVII

### ISOBUTANE/$C_4$ OLEFIN MOLAR RATIO

| Unit Cell Size nm | Corr. Range | % Conversion | | | | |
|---|---|---|---|---|---|---|
| | | 60 | 65 | 70 | 75 | 80 |
| 2.440 | 52-79 | 0.95 | 1.21 | 1.57 | 2.08 | 2.89 |
| | 52-72 | 0.95 | 1.18 | 1.48 | 1.90 | 2.54 |
| 2.444 | 62-81 | 1.01 | 1.25 | 1.56 | 1.99 | 2.62 |
| | 62-78 | 1.03 | 1.26 | 1.55 | 1.96 | 2.55 |
| | 49-81 | 1.14 | 1.35 | 1.62 | 1.99 | 2.51 |
| | 49-78 | 1.13 | 1.34 | 1.60 | 1.94 | 2.42 |
| 2.452 | 54-82 | 1.01 | 1.23 | 1.52 | 1.92 | 2.44 |
| | 54-76 | 1.02 | 1.21 | 1.47 | 1.81 | 2.29 |
| 2.469 | 49-83 | 1.09 | 1.34 | 1.67 | 2.13 | 2.81 |
| | 55-81 | 1.00 | 1.27 | 1.65 | 2.19 | 3.03 |
| | 48-83 | 1.09 | 1.34 | 1.67 | 2.13 | 2.81 |
| | 48-81 | 1.09 | 1.34 | 1.67 | 2.13 | 2.81 |

50

TABLE XVIII

LCO YIELD

| Unit Cell Size nm | Corr. Range | % Conversion | | | | |
|---|---|---|---|---|---|---|
| | | 60 | 65 | 70 | 75 | 80 |
| 2.440 | 52-79 | 22.9 | 21.1 | 19.1 | 16.8 | 14.3 |
| | 52-72 | 22.9 | 21.2 | 19.2 | 17.0 | 14.6 |
| 2.444 | 62-81 | 22.8 | 21.1 | 19.1 | 17.0 | 14.6 |
| | 62-78 | 22.7 | 21.0 | 19.2 | 17.1 | 14.8 |
| | 49-81 | 22.8 | 21.1 | 19.1 | 17.0 | 14.6 |
| | 49-78 | 22.8 | 21.1 | 19.2 | 17.1 | 14.7 |
| 2.452 | 54-82 | 22.6 | 21.0 | 19.2 | 17.1 | 14.9 |
| | 54-76 | 22.6 | 21.2 | 19.5 | 17.6 | 15.6 |
| 2.469 | 49-83 | 22.2 | 20.6 | 18.7 | 16.7 | 14.4 |
| | 55-81 | 22.4 | 20.8 | 18.9 | 16.8 | 14.5 |
| | 48-83 | 22.2 | 20.5 | 18.7 | 16.6 | 14.3 |
| | 48-81 | 22.2 | 20.6 | 13.7 | 16.7 | 14.4 |

51

TABLE XIX

BOTTOMS (%)

| Unit Cell Size nm | Corr. Range | % Conversion | | | | |
|---|---|---|---|---|---|---|
| | | 60 | 65 | 70 | 75 | 80 |
| 2.440 | 52-79 | 17.1 | 13.9 | 11.0 | 8.21 | 5.66 |
| | 52-72 | 17.1 | 13.8 | 10.8 | 7.97 | 5.39 |
| 2.444 | 62-81 | 17.2 | 13.9 | 10.9 | 8.02 | 5.36 |
| | 62-78 | 17.3 | 14.0 | 10.8 | 7.91 | 5.19 |
| | 49-81 | 17.2 | 13.9 | 10.9 | 8.02 | 5.37 |
| | 49-78 | 17.2 | 13.9 | 10.8 | 7.94 | 5.27 |
| 2.452 | 54-82 | 17.4 | 14.0 | 10.8 | 7.87 | 5.09 |
| | 54-76 | 17.4 | 13.8 | 10.5 | 7.39 | 4.45 |
| 2.469 | 49-83 | 17.8 | 14.4 | 11.3 | 8.34 | 5.61 |
| | 55-81 | 17.6 | 14.2 | 11.1 | 8.19 | 5.47 |
| | 48-83 | 17.8 | 14.5 | 11.3 | 8.44 | 5.73 |
| | 48-81 | 17.8 | 14.4 | 11.3 | 8.34 | 5.61 |

The results summarized in Tables XIV through XIX illustrate the desirable properties obtained by reducing the unit cell size of high zeolite catalysts by even amounts as small as 0.003 nm and further demonstrate the improved properties obtained by reducing the unit cell size to less than 2.460 nm. The results summarized also demonstrate the desirable combination of selectivities obtained when the unit cell size is in the range of from about 2.440 to 2.455 nm.

52

EXAMPLE XVI

This example illustrates that when catalysts of the present invention are combined with particles bearing shape selective zeolites other than faujasite, for example ZSM-5, a substantial increase in octane may be obtained albeit accompanied by a decline in gasoline yield which is commercially acceptable in view of the outstanding gasoline yields obtained with catalysts incorporating microspheres of the present invention.

To demonstrate the effects of combining e ZSM-5 containing microspheres with catalyst compositions of the present invention, the procedure of Example IV was repeated, except that the microspheres containing 20% ZSM-5 in kaolin were added to yield an overall catalytic composition containing about 1% ZSM-5 by weight. The catalyst to oil ratio was 9.31. The results are presented in Table XX.

53

TABLE XX

FCC PILOT UNIT SELECTIVITY RESULTS
DATA ADJUSTED TO 70% CONVERSION

| Yields, wt. % | Exp. Cat./AM + ZSM-5 |
|---|---|
| Gasoline | 53.2 |
| LCO | 18.7 |
| Bottoms | 11.4 |
| Gas, $C_4^-$ | 14.7 |
| Coke | 2.10 |
| RON | 92.2 |
| MON | 79.2 |

The research octane number of 92.2 is considered outstanding especially when combined with a gasoline yield of 53.2. Unleaded regular gasoline is usually specified as having (RON + MON)/2 = 87, whereas (RON + MON)/2 for the naphthas of Example XVI is 85.7 before reforming which usually increases the octane of naphthas substantially.

54

EXAMPLE XVII

The procedure of Example I was repeated except that the initial calcination was carried out at 1500°F and after the fourth ammonium exchange (the second after calcination), the batch of microspheres were divided into three portions: The first was oven dried and not subjected to any further heat treatment prior to microactivity testing. The second was calcined for 3 hours at 1000°F as described in Example I, while the third was calcined at 1500°F. The resulting cell sizes were 2.454; 2.446; and 2.441 nm respectively. In addition to the sodium contents and cell sizes resulting, Tables XXI and XXII set forth the activities and selectivities obtained after steaming at the indicated temperatures for 4 hours in 100% steam. For ease in comparison, comparable results obtained with catalysts prepared as set forth in Example V are also included in Table XXI.

0194101

55

TABLE XXI

| Calcination Temp. Initial/Final | USC (nm) | % Na$_2$O | % Conv./Steaming 1400 | 1450 | 1500 | 1550 |
|---|---|---|---|---|---|---|
| 1000/1500 | 2.440 | 0.46 | 87.6 | 82.5 | 81.3 | 67.1 |
| 1500/1500 | 2.441 | 1.01 | 85.4 | 82.8 | 74.0 | 60.7 |
| 1000/1000 | 2.452 | 0.37 | 88.8 | 86.7 | 75.9 | 69.2 |
| 1500/ - | 2.454 | 0.82 | 88.6 | 83.1 | 76.2 | 59.6 |
| 1000/1200 | 2.444 | 0.36 | 87.1 | 85.2 | 77.5 | 70.2 |
| 1500/1000 | 2.446 | 1.00 | 84.5 | 83.2 | 78.2 | 60.4 |

While these activities are somewhat lower than obtained previously, they are still quite acceptable and are considered quite surprising in view of the high sodium levels. Since these catalytic microspheres will often be combined with additive microspheres, the activity levels set forth in Table XXI are commercially acceptable.

56

## TABLE XXII

COMPARATIVE MAT SELECTIVITY RESULTS
(DATA ADJUSTED TO 70% CONVERSION)

| Calcination Temps | | | | | | |
|---|---|---|---|---|---|---|
| Initial | 1000 | 1500 | 1000 | 1500 | 1000 | 1500 |
| Final | 1500 | 1500 | 1000 | – | 1200 | 1000 |
| | | | | | | |
| UCS nm | 2.440 | 2.441 | 2.452 | 2.454 | 2.444 | 2.446 |
| Coke | 3.63 | 4.26 | 3.72 | 4.40 | 3.89 | 3.89 |
| Gasoline | 53.1 | 52.4 | 52.4 | 51.7 | 52.9 | 53.7 |
| $C_4^-$ | 13.3 | 13.3 | 13.9 | 13.9 | 13.2 | 12.4 |
| LCO | 19.2 | 19.2 | 19.5 | 18.6 | 19.2 | 20.0 |
| Bottoms | 10.8 | 10.8 | 10.5 | 11.4 | 10.8 | 10.0 |
| $i\text{-}C_4/C_4^=$ | 1.48 | 1.62 | 1.47 | 1.69 | 1.55 | 1.55 |

These results demonstrate that ordinarily the catalytic microspheres should initially be calcined within the range of 800-1200°F, preferably 900-1100°F, if the second calcination is to be in the range of 1200-1600°F, preferably 1400-1600°F, however, surprisingly good results can be obtained if the first calcination is carried out at 1300-1600°F, preferably 1400-1600°F, and the subsequent calcination at 800-1200°F, preferably 900-1100°F.

## EXAMPLE XVIII

A second example of a rare earth form of a catalyst of this invention was prepared as follows: The starting material was similar to the starting material of Example I, except that it had been ammonium exchanged to a low sodium content of 0.26% $Na_2O$ prior to calcination by a continuous exchange procedure using hot ammonium nitrate solution. Following washing with water and drying, 600 g of this catalyst was calcined in a fluidized bed for 2 hours at 1150°F under an atmosphere of 100% steam. Four hundred and fourteen (414) g of recovered product was slurried in 550 ml of deionized water, and 124 g of 25 weight % rare earth oxide solution was added. The pH was 3.4. The exchange reaction was carried out at 175°F for 2 hours, after which the product was filtered, washed with 2.5 liters of deionized water and dried. The final product contained 0.21% $Na_2O$ and 1.46% REO on a volatile free basis. The apparent zeolite index was 40, and the unit cell size was 2.441 nm.

Catalytic data for blends of 50% of the catalyst of this example with 50% additive microspheres was obtained from microactivity tests. Results are shown in Tables XXIII and XXIV. Comparison of the catalyst activities in Table XXIII with data in Table VI (for the 1:1 blend) suggests that this rare earth form of the catalyst of the invention has greater activity, especially after steaming at higher temperatures. Comparison of the selectivities shown in Table XXIV with those in Table X shows that the selectivities are similar. In this case, the higher $i\text{-}C_4/C_4^=$ ratio may indicate a loss in octane.

58

## TABLE XXIII

### MICROACTIVITY AFTER STEAMING

| Steaming Temperature °F | Catalyst of this Invention 1:1 Exp. Cat./AM |
|---|---|
| 1450 | 73.0 |
| 1500 | 70.5 |
| 1550 | 63.0 |

CLAIMS :

1. A fluid cracking catalyst consisting essentially of microspheres of in-situ crystallised Y-faujasite having a unit cell size of less than 2.460 nm, a sodium content (as $Na_2O$) of less than 2% by weight, a micropore volume of up to about 0.25 cc/g and a surface area in excess of 250 $m^2/g$.

2. A catalyst according to claim 1 having a total porosity of less than 0.5 or 0.25 cc/g and/or a micropore volume of from 0.02 to 0.25 cc/g (e.g. less than 0.2 cc/g preferably from 0.08 to 0.15 or to 0.10 cc/g.

3. A catalyst according to claim 1 or 2 wherein the volume of the 2 to 10 nm pores is from 0.05 to 0.20 cc/g, and that of the 60 to 2000 nm pores is less than 0.3 cc/g (preferably less than 0.2 cc/g), that of the 10 to 60 nm pores optionally being from 0.02 to 0.3 cc/g.

4. A catalyst according to any preceding claim wherein the unit cell size is from 2.45 to 2.46 nm or is less than 2.455 nm [e.g. from 2.435 to 2.455 nm] or less than 2.445 nm.

5. A catalyst according to any preceding claim wherein the surface area is in excess of 300 $m^2/g$ [e.g. 300 to 425 $m^2/g$] and is preferably greater than 325 or 350 $m^2/g$ and/or less than 750 or 500 $m^2/g$.

6. A catalyst according to any preceding claim wherein the sodium content by weight is less than 1.5%, preferably less than 1%, and more preferably less than 0.8%, being for example from 0.2 to 0.8% or from 0.25 or 0.3% to 0.5%.

7.   A catalyst according to any preceding claim which is substantially free of rare earth oxide and/or of transition metal compound.

8.   A method of preparing catalyst microspheres containing Y-faujasite, the method comprising providing microspheres containing at least 40 weight % [e.g. 50 to 70 weight %] of in-situ crystallised Y-faujasite having a micropore volume of up to 0.25 cc/g and reducing the unit cell size of the Y-faujasite by at least 0.001 nm and the sodium content by ammonium exchange and subsequent calcination (preferably in the presence of steam).

9.   A method according to claim 8 wherein the unit cell size is reduced by at least 0.002 nm, e.g. by at least 0.003 or 0.005 nm, and preferably by at least 0.01 or 0.10 nm.

10.   A method according to claim 8 or 9 wherein the unit cell size is reduced to below 2.46 nm [e.g. to 2.45 to 2.46 nm], preferably to below 2.455 nm [e.g. to 2.435 to 2.455 nm], and more preferably to below 2.445 nm.

11.   A method according to any of claims 8 to 10 wherein the treated microspheres have a surface area in excess of 250 $m^2$/g.

12.   A method according to any of claims 8 to 11 wherein the in-situ crystallised Y-faujasite is within macropores of calcined microspheres formed by spray drying an aqueous slurry of hydrous kaolin, sodium silicate and calcined kaolin, the spray dried catalyst microspheres preferably being internally or externally initiated.

13.   A method according to any of claims 8 to 12 wherein the catalyst product is according to any of claims 1 to 7.

- 61 -

0194101

14. A method according to any of claims 8 to 13 wherein the silica to alumina mole ratio of the initial Y-faujasite is at least 4.1, e.g. at least 4.5, preferably from 4.8 to 5.2.

15. A method according to any of claims 8 to 14 wherein the initial microspheres are subjected to two ammonium exchanges before steam calcination.

16. A method according to any of claims 8 to 15 wherein the initial microspheres are subjected to at least one ammonia exchange, then to calcination, then to another ammonia exchange, and optionally then to further calcination, the unit cell size of the Y-faujasite after the first calcination preferably being from 2.460 to 2.469 nm and/or the sodium content (as $Na_2O$) before the first calcination being reduced to at most 7 wt.% (e.g. 7 to 2 wt.%, preferably 3.5 to 2.5 wt.%) or to below 2 wt.%.

17. A method of fluid catalytic cracking of petroleum feedstock wherein there is used a cracking catalyst according to any of claims 1 to 7 or one produced by a method according to any of claims 8 to 16, the cracking preferably being conducted in a fluidized bed at a temperature of about 900 to 1100°F and/or said catalyst being in admixture with additive microspheres which are relatively inert for catalytic cracking and which constitute e.g. at least 35 wt.% of said admixture.

FIG. I.

SAMPLE VS꞉ CONVERSION

STRAIGHT CATALYSTS-
FULL CONVERSION RANGE DATA (60-90)

····NUMBERS IN PARENTHESES ARE THE
CALCULATED COKE YIELDS AT EACH
CONVERSION LEVEL REPRESENTED

0194101

# FIG. 2.

ULTRASTABILIZED HZC CAT/OIL AND CATALYTIC
COKE MAKE AS A FUNCTION OF UNIT CELL SIZE

STRAIGHT ULTRASTABILIZED HZC

# FIG. 4.

ULTRASTABILIZED HZC
COMBINED 1:1 WITH AM

# FIG. 3.

ULTRASTABILIZED HZC COKE MAKE (RELATIVE. TO A 24.44 Å CELL SIZE SAMPLE) VS ⋮ CONVERSION

CATALYSTS COMBINED I∶I WITH AM ⋮
FULL CONVERSION RANGE DATA (60-90)

····· NUMBERS IN PARENTHESES ARE THE
CALCULATED COKE YIELDS AT EACH
CONVERSION LEVEL REPRESENTED

FIG. 5.

ULTRASTABILIZED HZC COKE MAKE (RELATIVE TO A 24.44 Å CELL SIZE SAMPLE) VS. CONVERSION

CATALYSTS COMBINED 1:1 WITH AM : MODIFIED CONVERSION RANGE DATA

····NUMBERS IN PARENTHESES ARE THE CALCULATED COKE YIELDS AT EACH CONVERSION LEVEL REPRESENTED

# FIG. 6.

△ COKE MAKE AS A FUNCTION OF CONVERSION
AND UNIT CELL SIZE. DATA REFERENCED TO
24.40 Å UCS

STRAIGHT CATALYSTS, FULL DATA RANGE
USED IN CALCULATION (60-90% CONVERSION)

6/6

0194101

## FIG. 7.

ULTRASTABILIZED HZG CATALYSTS OF
VARIABLE UNIT CELL SIZE

ACTIVITY VS: STEAMING TEMPERATURE